# EUROPEAN PATENT SPECIFICATION

(11) **EP 1 402 194 B1**
(45) Date of publication and mention of the grant of the patent: **29.10.2008**
(21) Application number: 02736445.4
(22) Date of filing: 18.06.2002
(51) Int. Cl.: F16D 43/21, B60K 17/35

(54) **A BALL ARRANGEMENT IN A TORQUE TRANSMITTING DEVICE**
KUGELANORDNUNG IN EINER DREHMOMENTÜBERTRAGUNGSVORRICHTUNG
SYSTEME DE BILLES DANS UN DISPOSITIF DE TRANSMISSION DE COUPLE

(30) Priority: 05.07.2001 SE 0102409
(43) Date of publication of application: 31.03.2004
(73) Proprietor: Haldex Traction AB, 261 24 Landskrona (SE)
(72) Inventor: SEVERINSSON, Lars, S-310 21 Hishult (SE)
(74) Representative: Petri, Stellan
(86) International application number: PCT/SE2002/001180
(87) International publication number: WO 2003/004894

(56) References cited:
- WO-A1-98/26950

## Description

### Technical Field

The present invention relates to a device for transmitting torque between two rotatable, coaxial shaft members, the device comprising a number of alternate clutch discs, connected to the two shaft members and engageable to counteract differential rotational speed between the shaft members, and braking means for braking rotational movement, the rotational velocity in the braking means being proportional to said differential rotational speed.

### Background of the Invention

Devices for transmitting torque between two rotatable shafts are known from numerous patent publications. The two shafts may be the output shafts of a road vehicle differential mechanism. The device may accordingly in this case be called a differential brake. There may, however, be other instances when it is desired to counteract a certain rotational speed differential between two shafts, a typical example being the two shafts to the driven front and rear axle, respectively, of a four-wheel-drive vehicle.

There may be different techniques to obtain the counteracting of the rotational speed differential, but several of the known solutions rely on a hydraulic system.

A device of the kind defined is shown in WO 98/26950 and may be defined as an electromechanical device, as the braking means used therein are electrical or electromagnetical, which means that the normally used hydraulic system is dispensed with.

This device comprises
gear means connected to the first shaft member,
a pressure plate, which is connected to the second shaft member and is axially displaceable against the clutch discs for their engagement, and
transmission means between the gear means and the pressure plate for axially displacing the pressure plate against the clutch discs at a certain rotation differential between the gear means and the pressure plate,
the braking means being connected to the gear means for providing a braking force to the transmission means for its axial displacement.

In this device the gear means is of the planetary gear type. In a comparatively conventional way, it comprises gear wheels cooperating with the first shaft member, planet wheels, a planet holder device, a fixed gear rim, and a gear ring in engagement with the braking means.

Planetary gear devices are comparatively expensive, which may be a drawback in the road vehicle industry, where costs have to be kept down. They also tend to emit noise, which is a further drawback in a road vehicle environment.

The object of the invention is to provide an arrangement without the mentioned drawbacks but maintaining the reliability in construction and function of the planetary gear device.

Another object is to provide an arrangement which is as simple and cheap as possible, but still has the requisite strength and reliability.

A further object is to accomplish an arrangement with as low noise emission as possible.

### The Invention

This is according to the invention attained in that means for transmitting said differential rotational speed to the braking means comprises a number of balls arranged between on one hand a rotatable, first thrust ring and a second thrust ring attached to one of the shaft members and on the other hand an outer ring fixed to a housing of the device and a gear ring engaging a rotatable brake shaft of the braking means.

### Brief Description of the Drawings

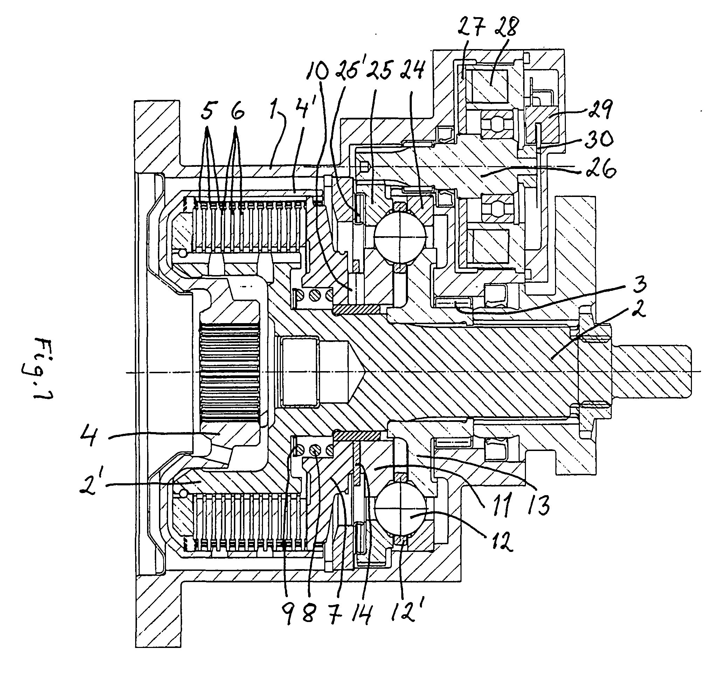

The invention will be described in further detail below reference being made to the accompanying drawing, whose single Figure is a side view in section of a device according to the invention.

### Detailed Description of a Preferred Embodiment

A device according to the invention is arranged in a housing 1, which comprises several parts but is not further described.

A first shaft member 2, extending to the right in the Figure, is rotatably journalled by means of a bearing 3 in the housing 1, which may be mounted in a road vehicle. A second shaft member 4 to the left in the Figure is illustrated as a sleeve-shaped part with central internal splines for cooperation with external splines on a shaft, which is not shown. This shaft is to be journalled for independent rotation in the first shaft member 2.

The two shaft members 2 and 4 are to be connected to further parts (not shown) in said vehicle. Only limited relative axial movements are permitted between the two shaft members.

The shaft members 2 and 4 shall be freely rotatable relative to each other, if the rotation differential between them is comparatively low. If the rotation differential is higher or is increased over a certain limit, the shaft members shall be frictionally connected, so that further increase of the rotation differential is counteracted. The connection conditions shall be independent of the rotation direction and which member that rotates faster than the other.

The frictional connection is established by means of a number of alternate clutch discs or rings 5 and 6, which are splined to an outer surface of a generally sleeve-shaped part 2' of the first shaft member 2 to the right in the Figure and an inner surface of a generally sleeve-shaped part 4' of the second shaft member 4, respectively.

At its outer periphery a ring-shaped pressure plate 7 is in splines-engagement with the left shaft member 4 via its part 4' and is rotatable in relation to the right shaft member 2. A compression spring 8 is arranged with one end against the pressure plate 7 and the other end against the sleeve-shaped part 2' of the first shaft member 2 over a bearing 9. The spring 8 biasses the pressure plate 7 to the right in the drawing.

In cooperation with the pressure plate 7 are rollers 10, a rotatable, first thrust ring 11, a number of circumferentially spaced balls 12 with a ball holder 12', and a second thrust ring 13 non-rotatably attached on the right shaft member 2.

On their axial surfaces facing each other, the pressure plate 7 and the rotatable thrust ring 11 are provided with ramps, as is described and schematically illustrated in WO 98/26950. The number of ramps evenly distributed on the periphery is two or more, corresponding to the number of rollers 10. These rollers 10 are held in proper positions by a roller cage 14.

From the illustration in WO 98/26950 it is evident that the pressure plate 7 and the rotatable thrust plate 11 are brought apart, when they are turned in relation to each other, so that each roller 10 climbs the ramps.

Due to the force from the spring 8 and the inclination angle of the ramps a certain torque will be transmitted to the rotatable, first thrust ring 11 at a rotation of the pressure plate 7. If this torque is exceeded, so that the pressure plate 7 and the rotatable, first thrust ring 11 are turned in relation to each other, the rollers 10 will enter the ramps displacing the pressure plate 7 axially to the left in the drawing, so that the clutch discs 5 and 6 are engaged frictionally and connect the shaft members 2 and 4.

As already stated, the rotatable, first thrust ring 11 is movably arranged on the right shaft member 2. The second thrust ring 13 is provided on the right shaft member 2 itself adjacent the rotatable, first thrust ring 11. The balls 12 are arranged around and in contact with oblique end surfaces of the two thrust rings 11 and 13. In a practical case the number of balls 12 may suitably be 12-16.

At their outer circumference the balls 12 are in contact with oblique end surfaces of a fixed outer ring 24 and a rotatable gear ring 25, journalled in relation to the housing 1 by an axial bearing 25'.

By the described construction with the compression spring 8 biassing the rotatable, first thrust ring 11 to the right in the Figure, the balls 12 will be held in engagement with all its associated rings 11, 13, 24, and 25.

The design and dimensioning of the arrangement is such that the gear ring 25 will not be imparted any motion, if the thrust rings 11 and 13 rotate with the same speed or do not rotate.

The external gears of the gear ring 25 are in engagement with gears of a brake shaft 26, which is journalled in the housing 1.

The brake shaft 26 is provided with a brake disc 27, constituting one part of an electromagnetic brake, whose second part is a fixed, preferably cylindrical electromagnet 28.

The rotation differential may be supervised in the brake 27, 28 or possibly directly on the shaft members 2 and 4. The technique for sensing and transmitting the rotation differential is state of the art. A rotation sensor 29 may for example be arranged at a brake shaft disc 30.

When the sensed rotation differential exceeds a predetermined value, the electromagnet 28 will be energized for frictionally braking the brake disc 27 and thus the brake shaft 26.

The function of the described device is as follows:
***a)*** ***The shaft members 2 and 4 rotate with the same speed.***
   The second thrust ring 13 is integral with and thus rotates with the same speed as the right shaft member 2. The pressure plate 7 rotates with the same speed as the left shaft member 4. Due to the torque exerted by the spring 8 on the rotatable, first thrust ring 11 also the latter will rotate with the same speed as the shaft member 4. As the thrust rings 11 and 13 rotate with the same speed, the balls 12 will only be imparted a rotation around axes parallel with the axis of the shaft members 2 and 4, and the gear ring 25 will remain stationary. No activation of the clutch discs 5 and 6 will occur.
***b)*** ***The shaft members 2 and 4 rotate with a rotation differential under the limit value.***
   Again, the second thrust ring 13 rotates with the same rotational speed as the right shaft member 2, whereas the pressure plate 7 rotates with the same speed as the left shaft member 4. Due to the torque exerted by the spring 8 also the rotatable, first thrust ring 11 rotates with the same speed as the left shaft member 4. This means that the two thrust rings 11 and 13 now rotate with different speeds, so that the balls 12 and the brake shaft 26 rotate. However, as the rotation differential is below the set limit, the electromagnetic brake 27, 28 is not activated. No activation of the clutch discs 5 and 6 will accordingly occur.
***c)*** ***The shaft members 2 and 4 rotate with a higher rotation differential.***
   As earlier, the second thrust ring 13 rotates with the right shaft member 2 and the pressure plate 7 with the left shaft member 4. The rotatable, first thrust ring 11 also rotates with the same speed as the left shaft member 4 due to the torque exerted by the spring 8. The thrust rings 11 and 13 rotate with different speeds, so that the balls 12 and the brake shaft 26 rotate. When the rotation differential is higher than a predetermined level, the electromagnetic brake 27, 28 is actuated. When the gear ring 25 is braked via the brake shaft 26, the rotatable, first thrust ring 11 is turned in relation to the pressure plate 7, so that the clutch discs 5 and 6 engage and counteract a further increase of the rotation differential. This engagement of the clutch discs 5 and 6 creates a further torque on the rotatable, first thrust ring 11. This further torque is proportional to the torque which the clutch discs 5 and 6 have to transfer for preventing the rotation differential from increasing.

It is important to note that the free-rolling balls 12 are actuated - via the rotatable, first thrust ring 11 - by a force proportional to the axial force from the clutch discs 5 and 6. This means that their ability to transmit torque increases with increasing engagement between the clutch discs, i e with increasing rotation differential, as is desirable.

The device contains a rotationally fedback electromagnetic friction brake. The rotational speed of the brake shaft or in other words the rotational differential is continuously monitored. The torque transmitting device is controlled in that the current in the electromagnetic brake is varied in such a way that the rotational speed of the brake disc is kept within predetermined limits. The torque transmitted by the overall device is proportional to the current in the electromagnetic brake.

It is within the scope of the invention to have other practical brake means than the shown and described electromagnetic brake. For example, an electric brake such as shown in WO 98/26950 may alternatively be employed.

## Claims

1. A device for transmitting torque between two rotatable, coaxial shaft members (2, 4), the device comprising a number of alternate clutch discs (5, 6), connected to the two shaft members and engageable to counteract differential rotational speed between the shaft members, and braking means (26-28) for braking rotational movement, the rotational velocity in the braking means being proportional to said differential rotational speed, **characterized in that** means for transmitting said differential rotational speed to the braking means (26-28) comprises a number of balls (12) arranged between on one hand a rotatable, first thrust ring (11) and a second thrust ring (13) attached to one of the shaft members (2) and on the other hand an outer ring (24) fixed to a housing (1) of the device and a gear ring (25) engaging a rotatable brake shaft (26) of the braking means (26-28).

2. A device according to claim 1, **characterized in that** the balls (12) are arranged between oblique surfaces facing each other of the two thrust rings (11, 13), the fixed outer ring (24), and the gear ring (5).

3. A device according to claim 2, **characterized in that** the rotatable, first thrust ring (11) is biassed by a compression spring (8) for keeping the balls (12) engaged with the oblique surfaces of the four rings (11, 13, 24, 25).

4. A device according to claim 3, **characterized in that** the axial force from the clutch discs (5, 6) is transmitted to and via the balls (12).

5. A device according to claim 1, **characterized in that** the balls (12) are arranged in a circumferential ball holder (12').

## Patentansprüche

1. Vorrichtung zur Drehmomentübertragung zwischen zwei drehbaren, koaxialen Wellenelementen (2, 4), wobei die Vorrichtung eine Anzahl von alternierenden Kupplungsscheiben (5, 6), die mit den zwei Wellenelementen verbunden und kuppelbar sind, um einer Differenzdrehgeschwindigkeit zwischen den Wellenelementen entgegenzuwirken, und eine Bremseinrichtung (26-28) zum Bremsen einer Rotationsbewegung, umfasst, wobei die Drehgeschwindigkeit in der Bremseinrichtung proportional zu der Differenzdrehgeschwindigkeit ist,
**dadurch gekennzeichnet, dass**
eine Einrichtung zum Übertragen der Differenzdrehgeschwindigkeit zu der Bremseinrichtung (26-28) eine Anzahl an Kugeln (12) umfasst, die angeordnet sind zwischen - auf der einen Seite - einem drehbaren, ersten Stützring (11) und einem zweiten Stützring (13), der an einem der Wellenelemente (2) befestigt ist, und - auf der anderen Seite - einem äußeren Ring (24), der an einem Gehäuse (1) der Vorrichtung fixiert ist, und einem Zahnkranz (25), der mit einer drehbaren Bremswelle (26) der Bremseinrichtung (26-28) zusammenwirkt.

2. Vorrichtung nach Anspruch 1, **dadurch gekennzeichnet, dass** die Kugeln (12) zwischen schrägen, einander gegenüberliegenden Oberflächen der zwei Stützringe (11, 13), dem fixierten äußeren Ring (24) und dem Zahnkranz (25) angeordnet sind.

3. Vorrichtung nach Anspruch 2, **dadurch gekennzeichnet, dass** der drehbare erste Stützring (11) durch eine Kompressionsfeder (8) vorgespannt ist, um die Kugeln (12) im Eingriff mit den schrägen Oberflächen der vier Ringe (11, 13, 24, 25) zu halten.

4. Vorrichtung nach Anspruch 3, **dadurch gekennzeichnet, dass** die axiale Kraft von den Kupplungsscheiben (5, 6) zu und über die Kugeln (12) übertragen wird.

5. Vorrichtung nach Anspruch 1, **dadurch gekennzeichnet, dass** die Kugeln (12) in einem umlaufenden Kugelhalter (12') angeordnet sind.

## Revendications

1. Dispositif pour transmettre un couple entre deux éléments d'arbre tournants, coaxiaux (2, 4), le dispositif comportant un certain nombre de disques alternés d'embrayage (5, 6), reliés aux deux éléments d'arbre et pouvant entrer en prise pour s'opposer à une vitesse de rotation différentielle entre les éléments d'arbre, et un moyen de freinage (26-28) destiné à freiner un mouvement de rotation, la vitesse de rotation dans le moyen de freinage étant proportionnelle à ladite vitesse de rotation différentielle, **caractérisé en ce qu'**un moyen pour la transmission de ladite vitesse de rotation différentielle au moyen de freinage (26-28) comporte un certain nombre de billes (12) agencées entre, d'une part, une première bague tournante (11) de poussée et une seconde bague (13) de poussée reliée à l'un des éléments d'arbre (2) et, d'autre part, une bague extérieure (24) fixée à un boîtier (1) du dispositif et une couronne dentée (25) pouvant entrer en prise avec un arbre tournant (26) de frein du moyen de freinage (26-28).

2. Dispositif selon la revendication 1, **caractérisé en ce que** les billes (12) sont agencées entre des surfaces obliques qui se font face des deux bagues de poussée (11, 13), de la bague extérieure fixe (24) et de la couronne dentée (25).

3. Dispositif selon la revendication 2, **caractérisé en ce que** la première bague tournante (11) de poussée est rappelée par un ressort de compression (8) afin de retenir les billes (12) en contact avec les surfaces obliques des quatre bagues (11, 13, 24, 25).

4. Dispositif selon la revendication 3, **caractérisé en ce que** la force axiale provenant des disques d'embrayage (5, 6) est transmise aux billes (12) et par l'intermédiaire de celles-ci.

5. Dispositif selon la revendication 1, **caractérisé en ce que** les billes (12) sont agencées dans un support circonférentiel (12') de billes.
